# EUROPEAN PATENT APPLICATION

(11) **EP 1 058 147 A2**
(43) Date of publication of application: **06.12.2000**
(21) Application number: 00201806.7
(22) Date of filing: 22.05.2000
(51) Int. Cl.: G02F 1/1334, G02F 1/1347, C09K 19/54

(54) **Multi-layer dual-polarity light modulating sheet**

(30) Priority: 04.06.1999 US 326063
(71) Applicant: EASTMAN KODAK COMPANY, Rochester, New York 14650 (US)
(72) Inventor: Stephenson, Stanley Ward c/o Eastman Kodak Company, Rochester, New York 14650-2201 (US)
(74) Representative: Lewandowsky, Klaus, Dipl.-Ing.

(57) **Abstract**

A light modulating, electrically responsive sheet having a transparent substrate; a transparent, electrically conductive layer formed over the transparent substrate; and a plurality of light modulating, electrically responsive layers, each formed of polymer with a dispersion of cholesteric liquid crystal material controllable between a first, light reflecting state and a second transparent state formed over at least a portion of the transparent, electrically conductive layer and each layer being operative in a different state so as to be able to transmit or reflect light in response to differently applied electric fields..

## Description

The present invention relates to image displays which can selectively transmit or reflect light.

Currently, information is displayed using assembled sheets of paper carrying permanent inks or displayed on electronically modulated surfaces such as cathode ray displays or liquid crystal displays. Other sheet materials can carry magnetically writable areas to carry ticketing or financial information, however magnetically written data is not visible.

A structure is disclosed in PCT/WO 97/04398, entitled "Electronic Book With Multiple Display Pages" which is a thorough recitation of the art of thin, electronically written display technologies. Disclosed is the assembling of multiple display sheets that are bound into a "book", each sheet provided with means to individually address each page. The patent recites prior art in forming thin, electronically written pages, including flexible sheets, image modulating material formed from a bi-stable liquid crystal system, and thin metallic conductor lines on each page. Various ways are disclosed to produce said conductor lines including photolithography, but not selective exposure and photographic development of traces from a photosensitive emulsion. One disadvantage of this structure is that individual pages are bound together and that many multi-layer conductors must pass across the pages to interconnect at the spine of the book.

Fabrication of flexible, electronically written display sheets are disclosed in US-A-4,435,047. A first sheet has transparent ITO conductive areas and a second sheet has electrically conductive inks printed on display areas. The sheets can be glass, but in practice have been formed of Mylar polyester. A dispersion of liquid crystal material in a binder is coated on the first sheet, and the second sheet is bonded to the liquid crystal material. Electrical potential applied to opposing conductive areas operate on the liquid crystal material to expose display areas. The display ceases to present an image when de-energized.

US-A-5,437,811 discloses a light modulating cell having liquid crystal and polymer with the chiral nematic liquid crystal. The chiral nematic liquid crystal has the property of being driven between a planar state reflecting a specific visible wavelength of light and a light scattering focal-conic state. The structure has the capacity of maintaining one of the given states in the absence of an electric field.

Much of the prior art requires multiple, separate layers to build electrical conductors for a display. Electrical traces and transparent conductive layers are typically formed through repeated vacuum deposition and photolithography of materials on the substrate. These processes are expensive and require long processing times on capital intensive equipment.

US-A-5,223,959 discloses a plurality of polymer dispersed liquid crystal material, each having a different dye material of red, green or blue dye material. Differing electrical signals to common electrodes operate on each of the materials to control the state of each type of dyed liquid crystal material. The patent requires the use of conventional nematic liquid crystals with a dye to absorb light. The droplets are chemically treated to be stable in either a clear or a light absorbing state. The invention also requires materials having different response times to electrical signals. The device must be continually driven so that the human eye perceives complementary colors. This arrangement has the disadvantage of requiring continuous, high speed electrical drive because the materials do not maintain their state. The material must be driven to achieve a neutral color density.

In the case of electronic display means, power must be provided to view images. Printed sheets receive ink and cannot be rewritten. In the case of magnetically written media such as magnetic areas on the back of credit cards, the information is not readable.

Accordingly, it is an object of the present invention to provide a display apparatus which does not require the use of dyes and makes use of a different optical mechanism.

Another object is to provide a color display permitting continuous, full color image that are stable in a zero-field condition.

Another object is to provide a display that can be re-written using electronic means.

Yet another objective is to improve optical properties of a display by using a single field to operate on a plurality of liquid crystal chemistries.

These objects are achieved in a light modulating, electrically responsive sheet comprising:
(a) a transparent substrate;
(b) a transparent, electrically conductive layer formed over the transparent substrate; and
(c) a plurality of light modulating, electrically responsive layers, each formed of polymer with a dispersion of cholesteric liquid crystal material controllable between a first, light reflecting state and a second transparent state formed over at least a portion of the transparent, electrically conductive layer and each layer being operative in a different state so as to be able to transmit or reflect light in response to differently applied electric fields..

Displays made in accordance with the present invention can be used to provide a rewritable image display sheet. The present invention uses a plurality of layers of cholesteric liquid crystal materials effective in at least two states, a reflective state and a transmissive state. This invention permits the use of light modulating, electrically responsive sheets with improved reflective efficiency. This invention permits the sheet to be electrically driven and to have a high light reflectivity. The sheet can be formed using inexpensive, efficient photographic coating methods. A single large volume of sheet material can be coated and formed into various types of sheets and cards. Displays in the form of sheets in accordance with the present invention are inexpensive, simple and fabricated using low-cost processes.
FIG. 1a is a sectional view of a sheet having multi-layer coating of liquid crystal in accordance with the present invention;
FIG. 1b is a sectional view of the sheet in FIG. 3a having a conductive overcoat;
FIG. 1c is a sectional view of the sheet of FIG. 3B having a scribed pattern in the conductive overcoat;
FIG. 2A is a view of the optical characteristics of a chiral nematic material in a planar state reflecting light;
FIG. 2B is a view of the optical characteristics of a chiral nematic material in a focal-conic light diffusing state;
FIG. 3A is an isometric view of a sheet in accordance with the present embodiment; and
FIG. 3B is a side sectional view of the sheet of FIG. 3A.

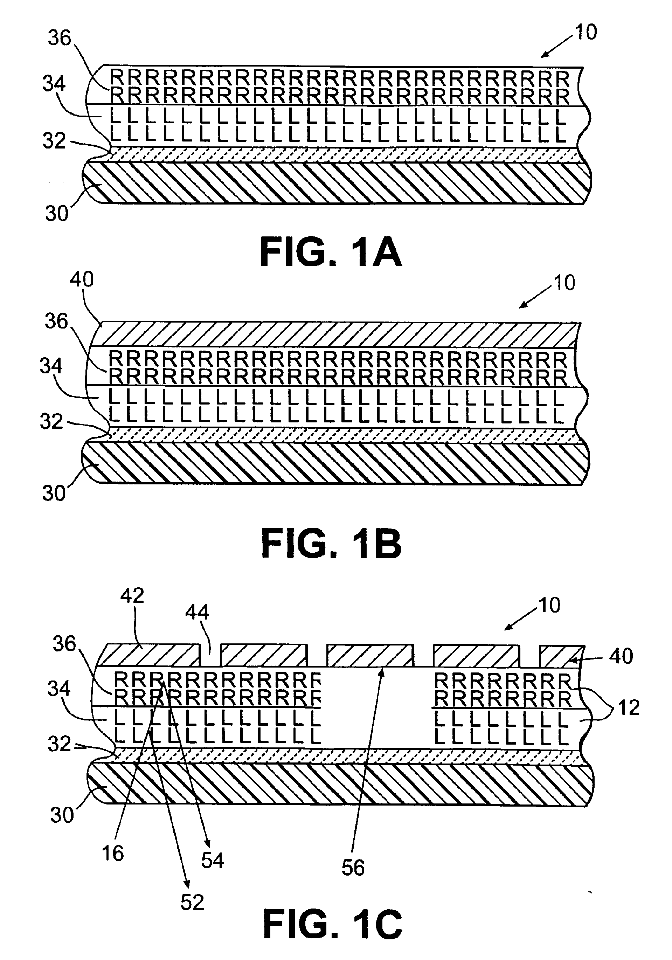

FIG. 1A depicts a sectional view of a sheet 10 used in the invention. The sheet 10 includes a substrate 30. Substrate 30 can be made of a transparent polymeric material, such as Kodak Estar film base formed of polyester plastic, and have a thickness of between 20 and 200 microns. For example, substrate 30 can be a 80 micron thick sheet of polyester. Other polymers, such as transparent polycarbonate, can also be used. An optically transparent, electrically conductive layer 32 is formed over the substrate 30. The transparent, electrically conductive layer 32 can be formed of tin-oxide or Indium-Tin-Oxide (ITO), with ITO being the preferred material. Typically, the transparent, electrically conductive layer 32 is sputtered onto the substrate 30 to a resistance of less than 250 ohms per square.

Multiple coatings of polymeric dispersed liquid crystal material are deposited over transparent, electrically conductive layer 32. The liquid crystal materials are chiral doped nematic liquid crystal also known as cholesteric liquid crystals. These types of liquid crystal molecules align in a first planar structure and chirality of the molecules is set to reflect a wavelength of visible light. These liquid crystals are capable of being dispersed in selected polymers.

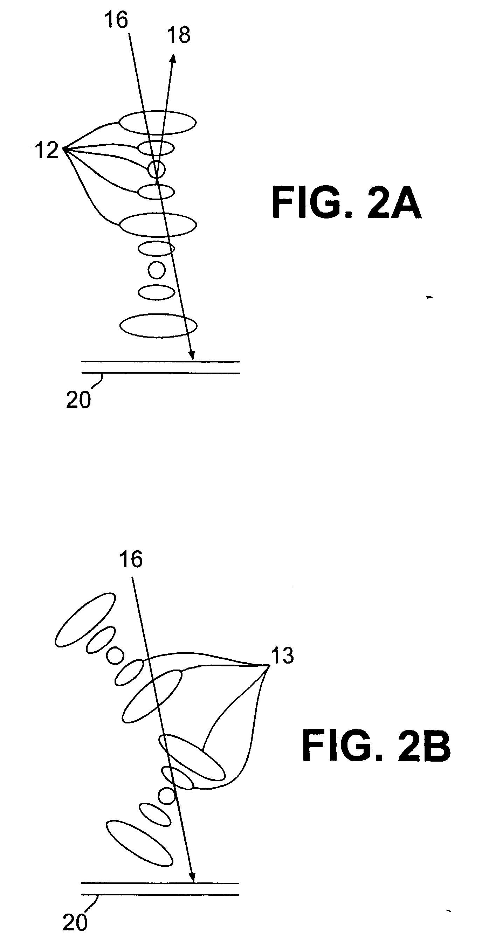

FIG. 2A and FIG. 2B show two states of cholesteric liquid crystals. In FIG. 2A, molecules are oriented to be planar liquid crystals 13. A high voltage that is switched to zero potential will align the molecules in this configuration. Incident light 16 can consist of red, green and blue fractions of light, each having either a right handed or left handed polarity. The pitch of the molecules can be adjusted to create a Bragg diffraction of reflected light 18 comprised of light of a given color and polarity.

Application of lower voltage field causes molecules of the chiral nematic material to break into tilted cells that are known as the focal conic liquid crystals 13 as shown in FIG. 2B. The lower voltage field progressively drives the molecules of the cholesteric material towards a transparent state. A light absorber 20 can be positioned on one the side opposing the incident light. As a result, a viewer perceives a green light that transitions to black as the cholesteric material changes from a planar to a fully evolved focal-conic state. The transition to the light transmitting state is progressive, and varying the low voltage time permits a variable level of reflection. These variable levels can be mapped out to corresponding gray levels, and when the field is removed, the cholesteric liquid crystal maintains a given optical state indefinitely. The states are more fully discussed in US-A-5,437,811.

If light absorber 20 is not used, the cholesteric material acts a s a filter for transmitted light, removing a given wavelength of light from incident light 16, and transmitting the remaining light. Multiple sheets 10 without light absorber 20 can be stacked to form a full color display. Such a structures, and another method for generating gray levels in cholesteric liquid crystals is disclosed in Hashimoto and others, "Reflective Color Display Using Cholesteric Liquid Crystals", SID 98 Digest, Article 31.1, 1998, pp. 897-900.

In the paper, a first high-voltage pulse clears all pixels, and a second, lower voltage pulse puts the liquid crystal molecules in the focal-conic scattering mode. The pulse time of a third, intermediate voltage pulse returns the liquid crystal material to different degrees of reflectivity based on the time of the third voltage pulse.

Chiral nematic materials are superior to undoped nematic crystals having incorporated dichroic dyes because chiral doped nematic material maintain a given state between reflective to transparent when the electrical drive field is removed. However, in a single layer configuration, they operate on light having only one polarity. Returning to FIG. 1A, a left-handed cholesteric material 34 in a polymeric binder is coated over transparent, electrically conductive layer 32. The left-handed pitch is tuned to reflect light having a wavelength of about 550 nanometers, and reflects green light having a right handed polarization.

In the current invention, a second coating of polymer dispersed right-handed cholesteric 36 is deposited over the polymer dispersed left-handed cholesteric 34 to improve the light reflectivity of sheet 10. Because each layer is polymerically dispersed, multiple layers having separable polar reflectivity can be incorporated into a multilayer coating sharing a common drive field. The multi-coated structure will have improved reflectivity over a single coating of material with only a single polarity of equivalent thickness.

Left handed cholesteric 34 and right handed cholesteric 36 are dispersed in a polymeric binder such as a UV curable polymer, an epoxy, polyvinyl alcohol (PVA) or in this invention de-ionized photographic. The binder content can be between 5% and 30%. Compounds such as gelatin and PVA are machine coatable on equipment associated with photographic films. It is important that the binder have a low ionic content. The presence of ions in such a binder hinders the development of an electrical field across the dispersed liquid crystal material. De-ionized photographic gelatin is required to reduce the i0onic content of gelatin to operable levels. Ions in the binder can migrate in the presence of an electrical field, chemically damaging the left handed cholesteric 34 and right handed cholesteric 36.

In FIG. 1B, a second conductive coating 40 is formed over right handed cholesteric 36. Other commonly used materials and processes can be used to provide a vacuum deposited coat to second conductive coating 40. In a vacuum environment, materials such as Aluminum, Tin, Silver, Platinum, carbon, Tungsten, Molybdenum, Tin or Indium can be used. Oxides of said metals can be used to darken second conductive coating 40. The metal material can be excited by energy from resistance heating, cathodic arc, electron beam, sputtering or magnetron excitation. Use of Tin-Oxide or Indium-Tin Oxide in the coating permits coatings of second conductive coating 40 that are also transparent. An ITO coating can be generated over sputtered over right handed cholesteric 36 that has less than 250 ohms per square of resistance and high light transmission. Alternatively, a light sensitive, metal forming layer can be used to create to second conductive coating 40. Such a material can be a silver halide coating that is light patterned and developed with nucleated silver ions to create a light absorbing, electrically conductive layer.

FIG. 1C is a sectional view through the sheet 10 after laser processing. The effective sheet conductivity of the conductive areas 42 is less than 250 ohms per square. Conductive areas 42 appear black, having an optical density of greater than 2.0 D. Nominally conductive metal in non-conductive areas 44 has been removed using a Ytterium-Aluminum Garnet (YAG) laser to create non-conductive areas 44 that define the extent of conductive areas 42. Non-conductive areas 44 are typically gaps approximately 2-5 microns wide that separate conductive areas 42. The YAG laser can generate patterns in second conductive coating 40 for both opaque and transmissive coatings of materials.

The transparent, electrically conductive layer 32 provides a continuous electrode across both left handed cholesteric 34 and right handed cholesteric 36. An electrical field across second conductive areas 42 and transparent, electrically conductive layer 32 will operate on both left handed cholesteric 34 and right handed cholesteric 36 to permit selective reflection or transmission of light in conductive areas 42.

Again in FIG. 1C, incident light 16 passes through transparent substrate 30 and transparent, electrically conductive layer 32. In the diagram, both left-handed cholesteric 34 and right-handed cholesteric 36 have been written into the reflective, planar state. When incident light 16 passes through left handed cholesteric 34, left handed light is reflected from left handed cholesteric 34 as left handed reflective light 52. Incident light 16, minus left handed reflected light 52, then passes through right-handed cholesteric 36. When incident light 16 passes through right handed cholesteric 36, right handed light is reflected from right handed cholesteric 36 as right handed reflective light 54. The combined reflectivity of left handed reflected light 52 and right handed reflected light 54 will be significantly greater reflected light intensity than that of a single layer of equivalent thickness of a cholesteric material having a single polarity. The two layer structure share a common field between conductive areas 42 and transparent, electrically conductive layer 32. When the materials are fully driven into the focal-conic state, all wavelengths of light can pass through sheet 10. If conductive areas 42 are absorptive, then incident light 16 becomes absorbed light 56.

EM Industries material BL-94 and BL-95 were dispersed in a solution containing de-ionized photographic gelatin to create individual domains having a particle size of between 1 and 10 microns. The two materials are chemically similar other than their complementary polarities of light reflection. A first sheet was created having a 9 micron thick layer or coating of BL-94 in deionized gelatin on an ITO coated mylar substrate. Second conductive coating 40 was a sputtered overcoat of platinum-oxide.

A second sheet was created having a 4.5 micron coatings of BL-94 in deionized gelatin and BL-95 in deionized gelatin to form a combined 9 micron thick coating. A second conductive coating 40 was created by sputtering an overcoat of platinum-oxide over the second sheet. The two sheets were written into a reflective state and the reflection density measured. The 9 micron thick coating of a BL-94 had a reflective density of 0.12. The dual layer coating having the same 9 micron thickness had a reflection density of 0.16. The experiment demonstrated the improvement in reflectivity of a dual layer of polymer dispersed liquid crystal having opposing reflective polarity.

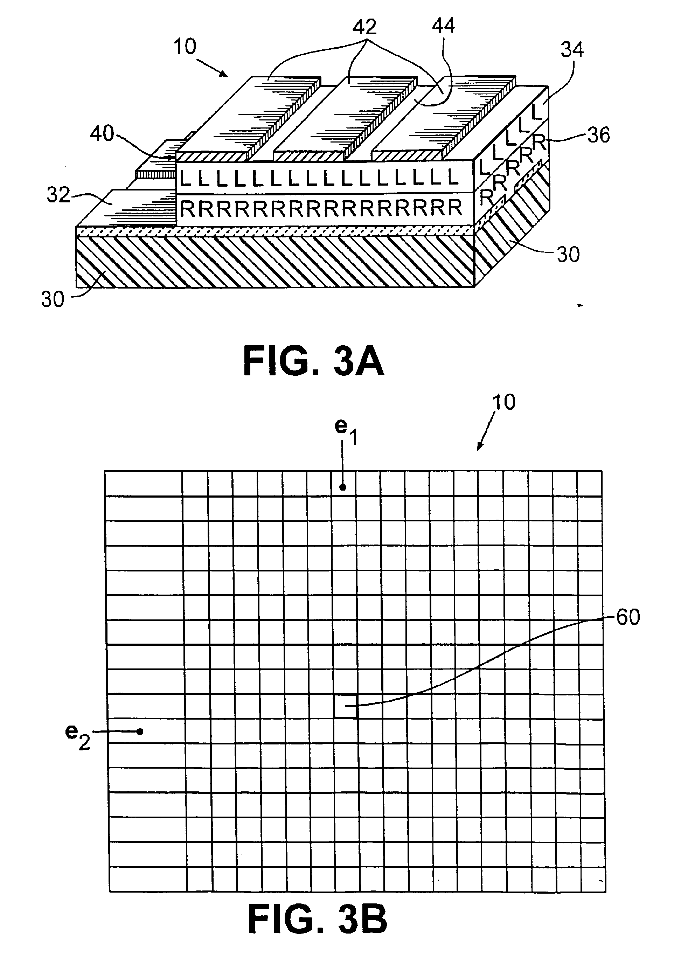

FIG 3A is an isometric view of a sheet 10 in accordance with the present invention. Second conductive coating 40 is a black conductive layer in stripes across sheet 10 in a first direction orthogonal to a second set of traces in transparent electrically conductive layer 32. FIG. 3B is a sectional view of sheet 10 in FIG. 3B, having a signal (e1-e2) applied across a pair of traces from each of the two electrically conductive layers permits operation on a given pixel 60. Two layers of cholesteric material having opposing reflective polarity have been disposed between second conductive coating 40 and transparent, electrically conductive layer 32. Application of an electrical field can write pixel 60 between a reflective and transmissive state. In the transmissive mode, the pixel 60 appears black due to the light absorption characteristics of second conductive coating 40. The layers of reflective cholesteric material of opposing polarity improve the brightness of pixel 60 over the reflectivity of a similar pixel of same thickness of cholesteric material having only a single polarity.

### PARTS LIST

- 10: sheet
- 12: planar liquid crystals
- 13: focal-conic liquid crystals
- 16: incident light
- 18: reflected light
- 20: light absorber
- 30: substrate
- 32: transparent, electrically conductive layer
- 34: left-handed cholesteric
- 36: right-handed cholesteric
- 40: second conductive coating
- 42: conductive areas
- 44: non-conductive areas
- 52: left-handed reflected light
- 54: right-handed reflected light
- 56: absorbed light
- 60: pixel

## Claims

1. A light modulating, electrically responsive sheet comprising:
(a) a transparent substrate;
(b) a transparent, electrically conductive layer formed over the transparent substrate; and
(c) a plurality of light modulating, electrically responsive layers, each formed of polymer with a dispersion of cholesteric liquid crystal material controllable between a first, light reflecting state and a second transparent state formed over at least a portion of the transparent, electrically conductive layer and each layer being operative in a different state so as to be able to transmit or reflect light in response to differently applied electric fields.

2. The light modulating, electrically responsive sheet of claim 1 wherein:
(a) at least one of the light modulating, electrically responsive layers has a state that reflects light of a first polarity; and
(b) at least of the light modulating, electrically responsive layers has a state that reflects light of a different polarity than the first polarity.

3. The light modulating, electrically responsive sheet of claim 1 wherein said light modulating, electrically responsive layers include a photographic gelatin having a light modulating material in the gelatin.

4. The light modulating, electrically responsive sheet of claim 3 wherein the gelatin is deionized photographic gelatin.
